# FASCICULE DE BREVET EUROPEEN

(11) **EP 0 526 366 B1**
(45) Date de publication et mention de la délivrance du brevet: **22.05.1996**
(21) Numéro de dépôt: 92440089.8
(22) Date de dépôt: 24.07.1992
(51) Int. Cl.: B29C 47/06, B29C 47/58, B29C 47/26, A23P 1/12, A23G 3/30

(54) **Groupe de co-extrusion bicolore multisorties pour pâte à mâcher ou analogue**
Mit mehreren Düsen versehene Zweifarbenkoextrusionsvorrichtung für Kaugummi oder ähnliches
Multinozzled bicoloured coextrusion apparatus for chewing gum or similar

(30) Priorité: 31.07.1991 FR 9109934
(43) Date de publication de la demande: 03.02.1993
(73) Titulaire: Société TOGUM, F-67116 Reichstett (FR)
(72) Inventeur: Towae, Gérard, F-67000 Strasbourg (FR)
(74) Mandataire: Metz, Paul

(56) Documents cités:
- FR-A- 1 224 923
- FR-A- 1 277 313
- FR-A- 2 589 781
- FR-A- 2 615 143
- US-A- 2 532 131

## Description

La présente invention concerne un groupe de co-extrusion bicolore multisorties pour pâte à mâcher ou analogue.

La pâte à mâcher est élaborée par une unité de préparation comportant un module de malaxage pour chacune des pâtes colorées sous pression alimentant un groupe d'extrusion. De ce groupe d'extrusion sort un produit filiforme dans lequel les pâtes de couleur sont juxtaposées selon les diverses formes de section des filières ou de la filière composite.

On souhaite produire par extrusion un boudin bicolore à formes non interpénétrantes, c'est-à-dire formes selon lesquelles le boudin de pâte extrudé comporte un noyau entouré par une autre forme continue et enveloppante.

Le noyau peut présenter une forme quelconque, par exemple un contour géométrique ou décoratif.

Actuellement, les groupes d'extrusion multisorties sont limités à deux sorties en parallèle.

On connaît par exemple la demande de brevet d'invention française 2 615 143, au nom de la demanderesse, pour un groupe d'extrusion mixte comprenant deux groupes de compression juxtaposés, chaque voie d'alimentation propre à un groupe alimentant le groupe auquel elle est raccordée et le groupe de compression opposé selon deux niveaux d'alimentation différents correspondants à chaque couleur. Ces groupes s'avèrent notablement complexes, et ne comportent pas de moyen d'obturation de chaque sortie de produit lorsque les organes situés en aval tombent en panne.

Ainsi, l'incident mécanique ou l'arrêt de fonctionnement se traduit par une perte conséquente de produit.

Le déposant a d'une part cherché à résoudre cette difficulté et d'autre part s'est fixé d'atteindre les buts suivants :
. concevoir et réaliser un dispositif multisorties dans lequel les sorties sont indépendantes et fonctionnent en parallèle ;
. concevoir et réaliser un dispositif multisorties comportant des filières d'extrusion interchangeables pour pouvoir modifier les contours des formes centrales et périphériques du boudin de pâte ;
. permettre une fermeture ou une ouverture des filières d'extrusion par une manoeuvre rapide, simple et réversible n'impliquant que des moyens peu onéreux ;
. concevoir et réaliser un dispositif adaptable sur un groupe de préparation bicolore existant, et interchangeable d'un groupe à un autre.

A cet effet, l'invention se rapporte à un groupe de co-extrusion bicolore multisorties pour pâte à mâcher ou analogue, comportant une unité de préparation à deux voies, une par couleur, chacune des voies comportant un introducteur qui remplit les vis d'extrusion pour diriger ladite pâte vers une sortie de l'unité de préparation, caractérisé en ce qu'il comporte une tête d'extrusion à deux voies parallèles d'alimentation de pâte sous pression, tête d'extrusion adaptable sur les sorties de l'unité de préparation par une face arrière et comportant deux chambres intérieures juxtaposées de distribution disposées le long de la tête d'extrusion, celle-ci possédant sur sa face avant une pluralité de sorties interchangeables de co-extrusion disposées le long de et chevauchant chacune les deux chambres intérieures et en ce que chacune des sorties de co-extrusion comporte un bloc intermédiaire pivotant recouvert par une filière de sortie, le pivotement s'effectuant selon diverses positions dont au moins deux positions permettant l'ouverture ou la fermeture, totale ou partielle de l'alimentation en pâte correspondante, le bloc intermédiaire pivotant comportant deux chemins dont les deux entrées séparées communiquent respectivement et indépendamment l'une de l'autre avec les chambres intérieures de distribution et dont une sortie annulaire enveloppe l'autre sortie.
Les avantages de l'invention s'avèrent nombreux, dont les principaux sont les suivants :
. possibilité d'interchanger par une manoeuvre rapide la filière centrale pour modifier la forme de sortie ;
. possibilité de placer plusieurs unités de sortie à filières en parallèle sur une même tête d'extrusion sans autre limite que celle de la longueur des chambres ;
. obturation simple et rapide d'une seule manoeuvre de l'unité par rotation de son boisseau ;
. possibilité d'inverser les deux couleurs de sortie sur une unité par un demi-tour de son boisseau ;
. interchangeabilité de la tête d'extrusion avec d'autres groupes de préparation-extrusion ;
. indépendance des unités d'une même tête qui peuvent fonctionner en parallèle et extruder des boudins de formes centrales différentes.

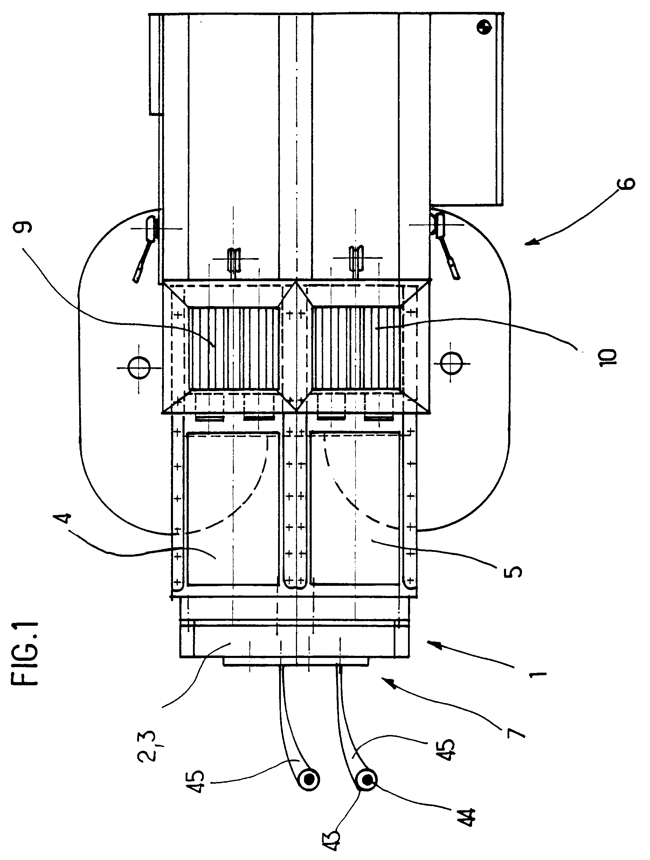

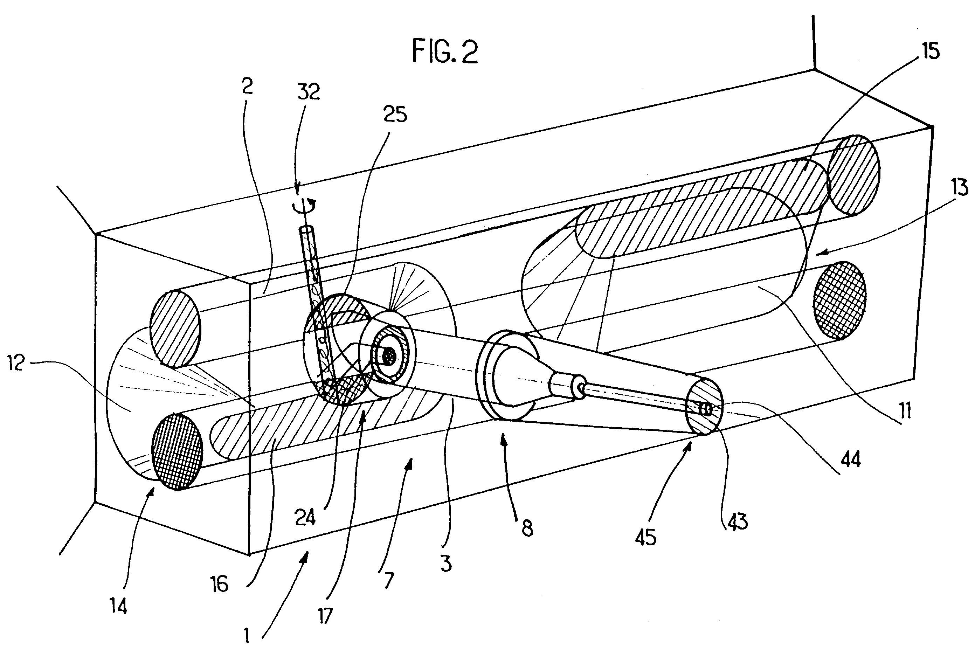

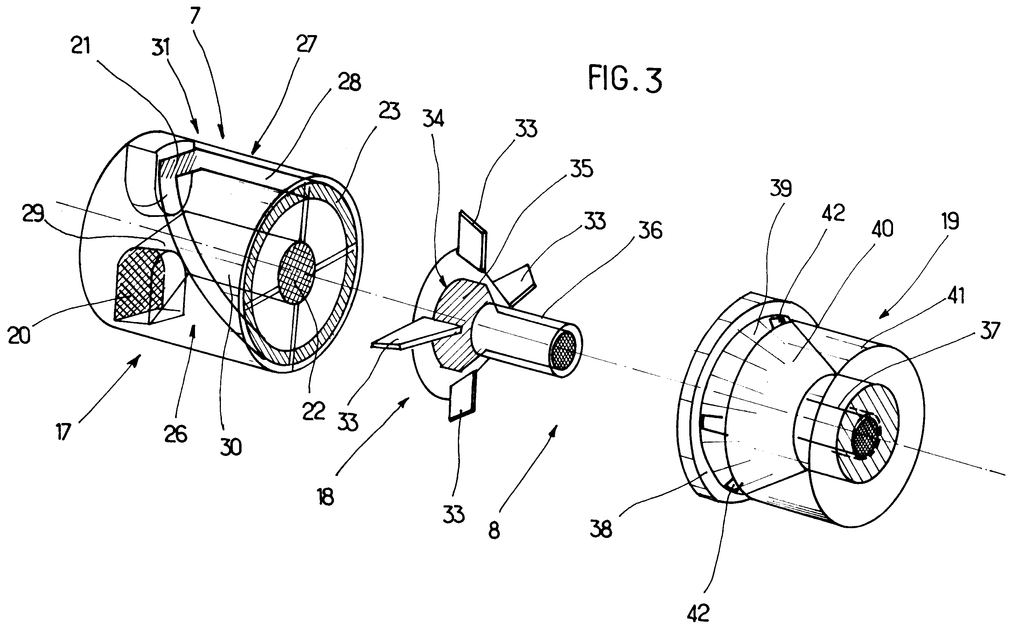

On comprendra mieux l'invention à l'aide de la description ci-après d'un mode de réalisation non limitatif de l'invention, faite en référence aux figures annexées suivantes :
. figure 1 : vue schématique en plan du groupe d'extrusion bicolore multisorties selon l'invention ;
. figure 2 : vue schématique en perspective du corps d'extrusion comportant deux unités de sorties parallèles ;
. figure 3 : vue en perspective dite en "éclaté" d'une unité de sortie.

Le groupe de co-extrusion selon l'invention présente une tête composite d'extrusion 1 à deux chambres intérieures de distribution 2, 3 de pâte sous pression, tête adaptable aux deux sorties 4, 5 d'une unité de préparation 6 par une face arrière.

Les chambres intérieures de distribution 2, 3 sont juxtaposées parallèles entre elles, longitudinalement à la tête d'extrusion.

La tête d'extrusion 1 porte une pluralité de sorties interchangeables telles que 7 en nombre variable à filières pivotantes 8 entre au moins deux positions : une position d'ouverture et une position de fermeture totale des alimentations en pâte.

Pour réaliser le pivotement des filières 8 et la réunion des chambres 2, 3, l'idée générale inventive consiste à prévoir un bloc intermédiaire formant interface entre les chambres et les filières 8.

Ce bloc intermédiaire est monté pivotant, chevauchant les chambres intérieures 2, 3 avec chacune desquelles il est en communication.

La tête d'extrusion représentée sur la figure 1 comporte l'unité de préparation 6 des deux pâtes à co-extruder selon deux voies, une voie par couleur, chacune comportant un introducteur de pâte 9, 10 qui reçoit des blocs de pâte arrivant d'un malaxeur et remplit les vis d'extrusion pour la diriger vers l'une ou l'autre sortie 4, 5 de l'unité de préparation 6.

La tête composite d'extrusion 1, formant unité de compression, se présente sous la forme générale non limitative d'un bloc mécanique parallélépipédique renfermant les deux chambres intérieures de distribution 2, 3 juxtaposées, parallèles et dirigées dans la direction du plus grand axe du bloc.

Une des faces de la tête d'extrusion, qui constitue la face arrière de fixation de ladite tête sur la sortie de l'unité de préparation 6, est parallèle à la direction générale des deux chambres 2, 3, et comporte deux ouvertures 11 et 12 débouchant chacune dans un volume convergent oblong de raccordement 13, 14. Chaque volume de raccordement 13, 14 présente une section d'entrée de forme oblongue supérieure à la section d'arrivée qui est également oblongue. Chaque volume de raccordement assurant l'alimentation en pâte débouche latéralement dans une des chambres cylindriques 2 ou 3 de la tête par une ouverture de sortie 15, 16 de section oblongue.

Sur la face avant de la tête d'extrusion est montée au moins une sortie d'extrusion à filière 8 telle que celle représentée sur la figure 3. Cette sortie d'extrusion est interchangeable et constituée d'un boisseau mobile d'extrusion 17 qui tient lieu de bloc intermédiaire ou d'interface et d'une filière 8 composée de deux pièces 18 et 19 de filière s'emboîtant l'une dans l'autre. Chaque filière 8 coiffe entièrement le boisseau d'extrusion 17.

Chaque boisseau d'extrusion 17 consiste en un bloc de forme générale cylindrique à deux entrées 20 et 21 et deux sorties correspondantes centrale 22 et périphérique 23. Le boisseau d'extrusion 17 est monté en position intermédiaire et raccordé à chacune des sorties 24 et 25 prévues latéralement en un endroit quelconque de la longueur des chambres intérieures de distribution 2 et 3 de la tête d'extrusion par des corps creux distincts, par exemple concentriques ou enveloppants. Le boisseau 17 débouche d'une part dans chacune des chambres de distribution 2 et 3 et d'autre part sur la face avant de la tête d'extrusion. Il constitue la pièce intermédiaire de réunion des deux chambres 2, 3 constituant l'interface entre les chambres et la filière pivotante de sortie 8.

Chaque boisseau 17 comporte deux voies, l'une centrale 26 et l'autre périphérique 27, constituant un trajet pour chacune des pâtes. Les trajets débutent par l'une ou l'autre entrée 20 ou 21, diamétralement opposées sur la face arrière du boisseau. Chaque voie communique avec une chambre de distribution 2 ou 3 de la tête d'extrusion 1. Les volumes débouchant par les sorties 22, 23 sur l'autre face sont concentriques. La sortie 22 est centrale et circulaire, et la sortie 23 est concentrique. Sur cette dernière débouche une chambre annulaire 28 dont le plus petit diamètre est nettement supérieur à celui de la sortie centrale circulaire 22 pour des raisons de résistance mécanique du boisseau.

La voie centrale se développe selon un conduit intérieur coudé 29 à branche circulaire centrale 30 débouchant par la sortie centrale circulaire 22.

L'autre voie présente une forme enveloppante cylindrique à base conique 31 et à sommet décentré, se développant selon la chambre annulaire 28, destinée à conduire la pâte depuis la section sensiblement rectangulaire de l'entrée 21 à travers le volume annulaire de la chambre 28 jusqu'à la sortie concentrique 23.

Les formes particulières des chemins permettent à l'un des boudins de pâte de sortir du boisseau en enveloppant l'autre boudin.

L'enveloppe périphérique cylindrique du boisseau comporte un moyen simple de pivotement sur lui-même autour de son axe principal, par exemple un ensemble à pignon-crémaillère 32 (figure 2). Le moyen de pivotement du boisseau sur lui-même permet à volonté de placer sélectivement les ouvertures d'entrées 20, 21 du boisseau en regard des sorties 24, 25 des chambres 2 et 3 de la tête d'extrusion 1, ou de les obturer partiellement ou totalement, ou d'inverser les couleurs de sortie par un demi-tour du boisseau.

En sortie du boisseau, on monte la filière 8 qui se compose de deux pièces de filière : la pièce centrale 18 et la pièce périphérique 19 de filière.

La pièce centrale 18, en forme d'entonnoir, comporte des ailerons d'appui 33, par exemple au nombre de quatre, pour s'appliquer sur la face avant du boisseau 17, et un conduit interne 34 dont la section de départ est circulaire et correspond à la section de la sortie centrale circulaire 22 du boisseau 17. Le conduit interne 34 se rétrécit en cône 35 pour déboucher dans un conduit central de sortie 36 dont la forme réelle (cylindrique sur la figure) peut varier.

La pièce périphérique de filière 19 affecte une forme extérieure cylindrique à conduit interne 37 se terminant par un épaulement circulaire 38 de fixation sur le boisseau 17 à conduit.

Le conduit interne 37 de cette filière périphérique 19 présente une entrée annulaire 39 identique à la sortie concentrique 23 du boisseau, puis une partie conique 40 débouchant sur une sortie cylindrique 41 entourant le conduit central de sortie 36.

On prévoit, dans le corps de la pièce périphérique 19 de filière, des encoches telles que 42 pour recevoir les ailerons d'appui 33 de la pièce centrale de filière et maintenir celle-ci appliquée et immobile contre le boisseau 17.

L'invention permet de co-extruder deux pâtes de couleurs différentes selon deux formes 43 et 44, l'une entourant l'autre pour former un boudin 45.

## Revendications

1. Groupe de co-extrusion bicolore multi-sorties pour pâte à mâcher ou analogue, comportant une unité de préparation (6) à deux voies, une par couleur, chacune des voies comportant un introducteur (9, 10) qui remplit les vis d'extrusion pour diriger ladite pâte vers une sortie (4, 5) de l'unité de préparation (6), caractérisé en ce qu'il comporte une tête d'extrusion (1) à deux voies parallèles d'alimentation de pâte sous pression, tête d'extrusion adaptable sur les sorties (4, 5) de l'unité de préparation (6) par une face arrière et comportant deux chambres intérieures juxtaposées de distribution (2, 3) disposées le long de la tête d'extrusion (1), celle-ci possédant sur sa face avant une pluralité de sorties interchangeables de co-extrusion disposées le long de et chevauchant chacune les deux chambres intérieures et en ce que chacune des sorties de co-extrusion comporte un bloc intermédiaire (9) pivotant recouvert par une filière de sortie (8), le pivotement s'effectuant selon diverses positions dont au moins deux positions permettant l'ouverture ou la fermeture, totale ou partielle de l'alimentation en pâte correspondante, le bloc intermédiaire (9) pivotant comportant deux chemins (26, 27) dont les deux entrées séparées (20, 21) communiquent respectivement et indépendamment l'une de l'autre avec les chambres intérieures de distribution (2, 3) et dont une sortie annulaire (23) enveloppe l'autre sortie (22).

2. Groupe d'extrusion selon la revendication 1, caractérisé en ce que la tête d'extrusion (1) est un bloc mécanique parallélépipédique comprenant les deux chambres intérieures cylindriques parallèles et juxtaposées de distribution (2, 3), et deux volumes oblongs de raccordement (13, 14) convergeant et débouchant latéralement dans les chambres de distribution cylindriques.

3. Groupe d'extrusion selon la revendication 1, caractérisé en ce que chaque sortie interchangeable comporte un bloc intermédiaire sous la forme d' un boisseau pivotant (17) de réunion des deux chambres de distribution (2, 3) de la tête d'extrusion et une filière de sortie (8) venant coiffer le boisseau (17).

4. Groupe d'extrusion selon la revendication 3, caractérisé en ce que le boisseau comporte deux corps creux intérieurs selon deux voies (26, 27) dont une centrale (26) et l'autre périphérique (27) de forme enveloppante cylindrique présentant une sortie annulaire (23) enveloppant la sortie (22) du chemin central.

5. Groupe d'extrusion selon l'une quelconque des revendications 3 et 4, caractérisé en ce que la filière de sortie (8) est double, formée d'une pièce centrale de filière (18) et d'une pièce périphérique de filière (19) enveloppant la première, chaque filière s'emboîtant l'une dans l'autre et venant coiffer le boisseau (17).

6. Groupe d'extrusion selon la revendication précédente, caractérisé en ce que la pièce centrale de filière (18) comporte une pluralité d'ailerons d'appui (33) s'appliquant sur le boisseau (17) et un conduit interne (34) en entonnoir terminé par une sortie à contour déterminé, et en ce que la pièce périphérique (19) de filière comporte un conduit interne (37) à entrée annulaire et sortie enveloppant la sortie de la filière centrale, des encoches adaptées aux ailerons d'appui, et un épaulement circulaire (38) d'appui-fixation sur le boisseau (17).

## Claims

1. Multi-outlet bi-coloured coextrusion apparatus for chewing gum or the like, comprising a preparation unit (6) having two channels, one per colour, each of the channels comprising a feeder (9, 10) which fills the extrusion screws in order to direct the gum towards an outlet (4, 5) of the preparation unit (6), characterised in that it comprises an extrusion head (1) having two parallel channels for supplying gum under pressure, which extrusion head can be fitted onto the outlets (4, 5) of the preparation unit (6) by a rear face and which comprises two juxtaposed internal distribution chambers (2, 3) arranged along the extrusion head (1), the latter having on its front face a plurality of interchangeable coextrusion outlets arranged along and each straddling the two internal chambers, and in that each of the coextrusion outlets comprises a pivoting intermediate block (9) covered by an outlet die (8), pivoting being effected in accordance with various positions of which at least two permit the total or partial opening or closure of the corresponding gum supply, the pivoting intermediate block (9) comprising two paths (26, 27) of which the two separate inlets (20, 21) communicate respectively and independently of one another with the internal distribution chambers (2, 3) and of which one annular outlet (23) sheathes the other outlet (22).

2. Extrusion apparatus according to Claim 1, characterised in that the extrusion head (1) is a parallelepipedal mechanical block comprising the two parallel and juxtaposed internal cylindrical distribution chambers (2, 3), and two oblong connecting volumes (13, 14) which converge and open out laterally in the cylindrical distribution chambers.

3. Extrusion apparatus according to Claim 1, characterised in that each interchangeable outlet comprises an intermediate block in the form of a pivoting casing (17) for joining the two distribution chambers (2, 3) of the extrusion head, and an outlet die (8) covering the casing (17).

4. Extrusion apparatus according to Claim 3, characterised in that the casing comprises two internal hollow bodies which are two channels (26, 27), Of which one is central (26) and the other is peripheral (27) and has a cylindrical sheathing shape and an annular outlet (23) which sheathes the outlet (22) of the central path.

5. Extrusion apparatus according to either Claim 3 or Claim 4, characterised in that the outlet die (8) is a double die and is formed by a central die member (18) and a peripheral die member (19) sheathing the first, each die nesting in the other and covering the casing (17).

6. Extrusion apparatus according to the preceding claim, characterised in that the central die member (18) comprises a plurality of support fins (33) which are applied to the casing (17) and an internal funnel-shaped duct (34) which is terminated by an outlet having a predetermined contour, and in that the peripheral die member (19) comprises an internal duct (37) which has an annular inlet and an outlet sheathing the outlet of the central die, recesses adapted to the support fins, and a circular shoulder (38) for support-securing to the casing (17).

## Patentansprüche

1. Vorrichtung zum zweifarbigen Koextrudieren von Kaumasse oder dergleichen mit mehreren Austrittsöffnungen, bestehend aus einer zweizügigen Zubereitungseinheit (6), für je eine Farbe, wobei jeder Zug einen Einzug (9, 10) aufweist, der die Extrusionsschnecken füllt, um die Masse in Richtung eines Ausgangs (4, 5) der Zubereitungseinheit (6) zu lenken, dadurch gekennzeichnet, daß sie einen Extrusionskopf (1) mit zwei parallelen Zügen zur Druckzuführung der Masse aufweist, wobei der Extrusionskopf an die Auslässe (4, 5) der Zubereitungseinheit (6) mit seiner Rückseite anpaßbar ist und zwei nebeneinander angeordnete innere Verteilerkammern (2, 3) aufweist, die entlang des Extrusionskopfes (1) angeordnet sind, wobei dieser an seiner Vorderseite eine Vielzahl von auswechselbaren Koextrusions-Auslässen aufweist, die entlang der zwei Verteilerkammern und diese jeweils übergreifend angeordnet sind, und daß jeder Koextrusions-Auslaß einen durch ein Spritzmundstück (8) überdeckten, drehbaren Zwischenblock (17) aufweist, der in verschiedene Stellungen drehbar ist, von denen zumindest zwei Stellungen das vollständige oder teilweise Öffnen oder Schließen der entsprechenden Masseeinspreisung ermöglichen, und zwei Züge (26, 27) aufweist, deren zwei getrennte Eingänge (20, 21) jeweils und unabhängig voneinander mit den inneren Verteilerkammern (2, 3) kommunizieren und deren einer ringförmiger Auslaß (23) den anderen Auslaß (22) umgibt.

2. Vorrichtung nach Anspruch 1, dadurch gekennzeichnet, daß der Extrusionskopf (1) ein parallelepipedisch ausgebildeter Block ist, der die beiden inneren, zylindrisch ausgebildeten, parallel nebeneinander angeordneten Verteilerkammern (2, 3) und zwei längliche konvergierende Verbindungsvolumina (13, 14) umfaßt, welche seitlich in die zylindrischen Verteilerkammern münden.

3. Vorrichtung nach Anspruch 1, dadurch gekennzeichnet, daß jeder auswechselbare Auslaß einen Zwischenblock in Form einer drehbaren Hülse (17) zur Verbindung der beiden Verteilerkammern (2, 3) des Extrusionskopfs und ein Spritzmundstück (8) aufweist, die die Hülse (17) überdeckt.

4. Vorrichtung nach Anspruch 3, dadurch gekennzeichnet, daß die Hülse für die zwei Züge (26, 27) zwei innere Hohlkörper aufweist, einen zentralen (26) und den anderen peripher (27) in Form einer zylindrischen Umhüllung mit einem ringförmigen Auslaß (23), der den Auslaß (22) des zentralen Zugs umgibt.

5. Vorrichtung nach Anspruch 3 oder 4, dadurch gekennzeichnet, daß das Spritzmundstück (8) ein Doppelmundstück ist und von einem zentralen Mundstück (18) und einem dieses umgebenden, peripheren Mundstück (19) gebildet ist, wobei die Düsen ineinandergreifen und die Hülse (17) überdecken.

6. Vorrichtung nach dem vorangehenden Anspruch, dadurch gekennzeichnet, daß das zentrale Mundstück (18) eine Vielzahl von sich an die Hülse (17) anlegenden Stützflügeln (33) und einen trichterförmigen Innenkanal (34) aufweist, der in einen Auslaß mit vorgegebener Kontur übergeht, und daß das periphere Mundstück (19) einen Innenkanal (37) mit ringförmigem Einlaß und den Auslaß des zentralen Mundstücks umgebenden Auslaß, an die Stützflügel angepaßte Ausnehmungen und eine ringförmige Schulter (38) zur Anlagefixierung an der Hülse (17) aufweist.
